# EUROPÄISCHE PATENTSCHRIFT

(11) **EP 3 368 436 B1**
(45) Veröffentlichungstag und Bekanntmachung des Hinweises auf die Patenterteilung: **20.03.2019**
(21) Anmeldenummer: 16800878.7
(22) Anmeldetag: 28.10.2016
(51) Int. Cl.: B65D 59/06, B65D 23/00, B65D 23/08

(54) **KAPSEL FÜR EIN IM WESENTLICHEN ZYLINDRISCHES GEFÄSS**
CAPSULE FOR A SUBSTANTIALLY CYLINDRICAL VESSEL
CAPSULE POUR UN RÉCIPIENT SENSIBLEMENT CYLINDRIQUE

(30) Priorität: 28.10.2015 DE 202015105736 U
(43) Veröffentlichungstag der Anmeldung: 05.09.2018
(73) Patentinhaber: Morlo Gesellschaft mit beschränkter Haftung, 66386 St. Ingbert (DE)
(72) Erfinder: UNGER, Michael, 66583 Spiesen-Elversberg (DE); UNGER, Wolfgang, 66583 Spiesen-Elversberg (DE); NIKOLAI, Werner, 66386 St. Ingbert (DE)
(74) Vertreter: Patentanwaltskanzlei Vièl & Wieske PartGmbB
(86) Internationale Anmeldenummer: PCT/DE2016/100507
(87) Internationale Veröffentlichungsnummer: WO 2017/071693

(56) Entgegenhaltungen:
- WO-A1-2015/158331
- US-A- 4 187 276
- US-A- 5 062 537
- US-A1- 2001 038 014

## Beschreibung

Die vorliegende Erfindung betrifft eine Kapsel für ein im Wesentlichen zylindrisches Gefäß, mit einer Mantelfläche, einem oberen offenen Ende und einem unteren geschlossenen Ende, wobei die Mantelfläche zumindest im Bereich des offenen Endes im Wesentlichen zylindrisch ausgebildet ist.

Die US 4 187 276 A, die eine Kapsel gemäß dem Oberbegriff des Anspruchs 1 offenbart, und US 2001/038014 A1 offenbaren Aufstecksockel für Flaschen aus thermoplastischem Material mit konvexem Boden. Diese Aufstecksockel werden auf den konvexen Boden sowie die Mantelfläche der Flaschen mittels eines ringförmigen Etikettes aufgeschrumpft, damit diese Flaschen stabil aufrecht gestellt werden können.
Kapseln werden auch auf oftmals zylindrischen Gefäßen über der Öffnung des Gefäßes, durch die die Entnahme des Produkts erfolgt, aufgebracht, um als wirksamer Schutz gegen Fälschung zu dienen. Sie bestehen aus folienartigem Material, das vorzugsweise transparent ist.
Bei zahlreichen Produkten (Liquida, Tabletten oder lyophilisierte Produkte) des Pharmabereichs und der Analytik kann eine Kapsel, die sich unter Hitzeeinwirkung zusammenzieht (Schrumpfkapsel) aufgrund der Wärmeempfindlichkeit des jeweiligen Produktes jedoch nicht verwendet werden.
Dementsprechend wurden Kapseln entwickelt, die auf die Öffnung des im Wesentlichen zylindrischen Gefäßes aufgesteckt und nicht thermisch fixiert werden. Eine derartige Kapsel zum Aufstecken auf die Produktentnahmeöffnung eines im Wesentlichen zylindrischen Gefäßes ist beispielsweise in der WO 2015/158331 A1 offenbart.
Obwohl diese Kapseln Produktfälschungen kenntlich machen, da die Kapseln nach dem Öffnen zerstört sind, schützen diese Kapseln die im Wesentlichen zylindrischen Gefäße (Fläschchen), die auf Grund der beinhaltenden Chemikalien oder Pharmazieerzeugnisse oftmals aus Glas oder ähnlichen zerbrechlichen Materialen gefertigt wurden, nur im oberen Öffnungsbereich der Gefäße gegen Bruch.

Der übrige Bereich der im Wesentlichen zylindrischen Gefäße wird nicht vor Bruch geschützt.

Neuerdings wird jedoch vorgeschrieben, dass diese Gefäße einen Sturz, beispielsweise ausgelöst durch das Fallenlassen des Fläschchens durch eine stehende Person, unbeschadet überstehen müssen, ohne dass das Gefäß zerspringt oder Splitter im Inneren des Gefäßes abplatzen.
Der vorliegenden Erfindung liegt daher die Aufgabe zugrunde, im Wesentlichen zylindrische Gefäße kostengünstig gegen ein Zerbrechen zu schützen.
Diese Aufgabe wird durch eine Kapsel zum Aufstecken auf das bodenseitige Ende eines im Wesentlichen zylindrischen Gefäßes, wobei die Kapsel eine Mantelfläche, ein oberes offenes Ende und ein unteres geschlossenes Ende aufweist und die Mantelfläche zumindest im Bereich des offenen Endes im Wesentlichen zylindrisch ausgebildet ist, wobei die Mantelfläche und das geschlossene Ende aus einer Kunststofffolie bestehen, wobei die Mantelfläche oberhalb des geschlossenen Endes wenigstens ein Mittel zum Ausbilden eines Freiraums aufweist, wobei das Mittel zum Ausbilden eines Freiraums in den Innenbereich der Kapsel hineinragt, wodurch eine Verjüngung des Innenquerschnitts der Kapsel erreicht wird, und wobei das Mittel zum Ausbilden eines Freiraums als eine zumindest über einen Teil des Umfangs der Mantelfläche verlaufende nach innen gerichtete Sicke ausgebildet ist, wobei die Sicke durch Anordnung eines Wulstes bzw. Vorsprungs im Inneren der Mantelfläche gebildet sein kann, wobei der Wulst oder der Vorsprung ins Innere der Kapsel hineinragt, gegen welche Sicke der Boden des im Wesentlichen zylindrischen Gefäßes beim Aufstecken der Kapsel stoßen kann und die das weitere Einführen des im Wesentlichen zylindrischen Gefäßes in den Freiraum der Kapsel verhindern kann, dadurch gelöst, dass die Mantelfläche zum Ausgleichen von Toleranzen des Gefäßdurchmessers des im Wesentlichen zylindrischen Gefäßes oberhalb der Mittel zum Ausbilden eines Freiraums wenigstens eine senkrecht zur Achse der Kapsel zum Innern der Kapsel gerichtete zweite Sicke und/oder nach innen gerichtete Noppen und/oder wenigstens eine parallel zur Achse der Kapsel zum Innern der Kapsel gerichtete dritte Sicke aufweist. Die Kapsel ist dabei so ausgestaltet, dass sie auf das bodenseitige Ende des im Wesentlichen zylindrischen Gefäßes aufgesteckt werden kann. Die Toleranzgrenzen des im Wesentlichen zylindrischen Gefäßes werden hierbei ausgeglichen. Die Kapsel wird somit formschlüssig mit dem zylindrischen Gefäß verbunden und es bedarf keiner thermischen Fixierung, wie dies beim Aufschrumpfen der Fall ist. Die wesentlichen Vorteile der Erfindung bestehen in den geringen Kosten, des einfachen Aufbringens der Kapsel auf das zylindrische Gefäß und der dennoch effizienten Bruchsicherung.

Durch das Hineinragen der Sicke in den Innenbereich der Kapsel wird eine Verjüngung des Innenquerschnitts der Kapsel erreicht. Es ist demnach eine Schulter ausgebildet, gegen die der Boden des im Wesentlichen zylindrischen Gefäßes bei Aufstecken der Kapsel stößt und die das weitere Einführen des im Wesentlichen zylindrischen Gefäßes in die Kapsel verhindert.

Dementsprechend wird ein Freiraum im Bereich zwischen der Mantelfläche der Kapsel (im Bereich zwischen dem wenigstens einem Mittel zum Ausbilden eines Freiraums und dem unteren geschlossenen Ende der Kapsel) und dem Bodenbereich der Kapsel erreicht. Dieser Freiraum wird - wenn die Kapsel auf das bodenseitige Ende des Gefäßes aufgesteckt ist - im oberen Bereich durch den Boden des im Wesentlichen zylindrischen Gefäßes begrenzt.

Schlägt das im Wesentlichen zylindrische Gefäß mit der über dem Boden aufgesteckten Kapsel mit der Unterseite auf dem Boden auf, bewirkt der Freiraum, da durch diesen der Bodenbereich des Gefäßes gepolstert ist, dass ein Bruch verhindert wird.

Die Sicke kann hierbei durch die Mantelfläche selbst als Ausformung (d.h. die Mantelfläche wölbt sich ins Innere der Kapsel) gebildet sein oder aber durch Anordnung eines Wulstes bzw. Vorsprungs im Inneren der Mantelfläche gebildet sein, wobei bei letzterer Ausführung der Wulst oder der Vorsprung dann ins Innere der Kapsel hineinragt.
Durch die Sicke in der Mantelfläche wird in der Mantelfläche im Bereich der Sicke eine Schulter gebildet, auf der der Boden des Gefäßes aufliegen kann. Die Sicke kann umlaufend in der Mantelfläche oder aber auch nur partiell umlaufend angeordnet sein. Ebenso können mehrere Sicken verteilt auf dem Umfang der Mantelfläche, vorzugsweise auf einer Höhe, angeordnet sein. Unterhalb der wenigstens einen Sicke ist der Freiraum angeordnet.
Eine vorteilhafte Ausgestaltung der Kapsel sieht vor, dass die Mantelfläche und das geschlossene Ende aus Polyvinylchlorid (PVC) hergestellt sind.
Erfindungsgemäß ist weiterhin vorgesehen, dass die Mantelfläche oberhalb der Mittel zum Ausbilden eines Freiraums wenigstens eine senkrecht zur Achse der Kapsel, zum Innern der Kapsel gerichtete zweite Sicke und/oder nach innen gerichtete Noppen und/oder wenigstens eine parallel zur Achse der Kapsel, zum Innern der Kapsel gerichtete dritte Sicke aufweist.

Die zweite und/oder dritte Sicken und/oder Noppen sind als Einbuchtung in der Kapsel ausgebildet, die das Einschieben des im Wesentlich zylindrischen Gefäßes begrenzt und somit einen gewünschten definierten Abstand der Kapsel sicherstellt. Zugleich können Toleranzen des Gefäßdurchmessers des im Wesentlichen zylindrischen Gefäßes ausgeglichen werden und die Kapsel im Bereich des offenen Endes verstärkt werden.

In diesem Zusammenhang ist es möglich, dass die zweite und/oder dritte Sicken jeweils zumindest über einen Teil des Umfangs der Mantelfläche der Kapsel verlaufen. Ebenso ist es möglich, dass die Sicken jeweils vollständig über den Umfang der Mantelfläche verlaufen. Ebenso können mehrere parallel zueinander angeordnete Sicken, insbesondere zwei parallele Sicken, vorgesehen sein.

Vorzugsweise ist der Freiraum mit einem Gas, insbesondere Luft, oder einem dämpfenden Material gefüllt. Als dämpfendes Material ist jedes Material geeignet, das mechanische Bewegungen dämpft, wie beispielsweise Schwämme, Gummi oder andere elastische Materialien.
Es ist möglich, dass die Kapsel im Bereich des geschlossenen Endes eine Perforation zum Entlüften des Innenbereichs der Kapsel aufweist.
Dies erleichtert das Austreten der in der Kapsel enthaltenen Luft beim Aufbringen der Kapsel auf das Gefäß.
Die Aufgabe wird ebenfalls durch ein im Wesentlichen zylindrisches Gefäß mit einer Öffnung am oberen Ende und einem Boden am unteren Ende, mit einer Kapsel gemäß Anspruch 1, die auf das untere Ende des im Wesentlichen zylindrischen Gefäßes aufgesteckt ist, gelöst.

Das im Wesentlichen zylindrische Gefäß ist vorzugsweise aus Glas oder einem anderen Material, in dem Chemikalien gelagert werden dürfen, hergestellt.

Hierbei kann vorgesehen sein, dass das zylindrische Gefäß einstückig ausgebildet ist.

Nachfolgend wird die Erfindung anhand von Zeichnungen näher, aber nicht darauf beschränkt, beschrieben. Es zeigen
- Fig. 1: ein im Wesentlichen zylindrisches Gefäß in Seitenansicht,
- Fig. 2: eine Kapsel die kein Teil der Erfindung ist, in Seitenansicht,
- Fig. 3: ein im Wesentlichen zylindrisches Gefäß, das in der Kapsel angeordnet ist, in Seitenansicht,
- Fig. 4: eine Ausführungsform der erfindungsgemäßen Kapsel in Schnittansicht.

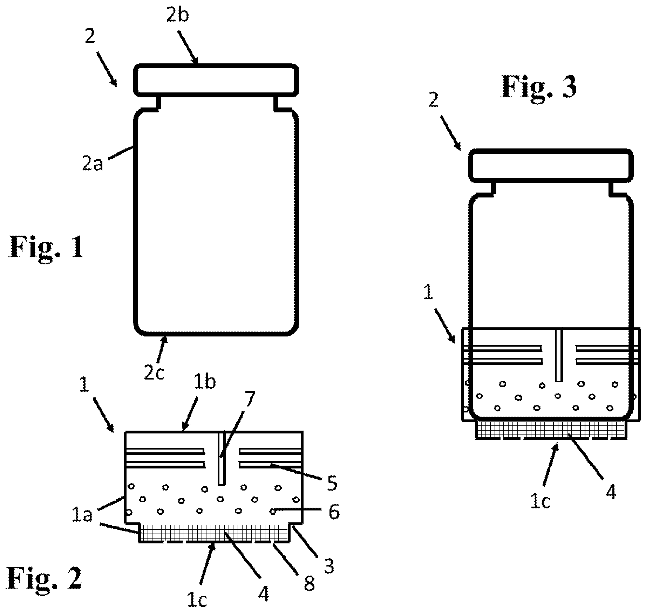

Die Fig. 1 bis 3 zeigen schematisch das Funktionsprinzip der vorliegenden Erfindung, auch wenn das dort gezeigte Mittel 3 zum Ausbilden des Freiraums 4 keine Sicke aufweist, und folglich kein Teil der Erfindung ist. In Fig. 1 ist das im Wesentlichen zylindrische Gefäß 2 mit einer Öffnung am oberen Ende 2b und einem Boden 2d am unteren Ende 2c dargestellt.

In Fig. 2 ist die Kapsel 1 für das in Fig. 1 gezeigte im Wesentlichen zylindrische Gefäß gezeigt. Die Kapsel 1 weist eine Mantelfläche 1a, ein oberes offenes Ende 1b und ein unteres geschlossenes Ende 1c auf. Wie dargestellt, ist die Mantelfläche 1a zumindest im Bereich des offenen Endes 1b im Wesentlichen zylindrisch ausgebildet. Zudem weist Mantelfläche 1a oberhalb des geschlossenen Endes 1c wenigstens ein Mittel 3 zum Ausbilden eines Freiraums 4 auf. Der Freiraum 4 ist mit einem Gas, insbesondere Luft, oder einem dämpfenden Material gefüllt. Unterhalb des Mittels 3 zum Ausbilden eines Freiraums 4 verläuft die Mantelfläche 1a in dem dargestellten Ausführungsbeispiel im Wesentlichen zylindrisch weiter. Die Mantelfläche 1a weist oberhalb der Mittel 3 zum Ausbilden eines Freiraums 4 wenigstens eine senkrecht zur Achse der Kapsel 1 zum Innern der Kapsel 1 gerichtete zweite Sicke 5, nach innen gerichtete Noppen 6 und eine parallel zur Achse der Kapsel 1 zum Innern der Kapsel 1 gerichtete dritte Sicke 7 auf. Im Bereich des geschlossenen Endes 1c weist die Kapsel 1 eine Perforation 8 zum Entlüften des Innenbereichs der Kapsel 1 auf In Fig. 3 ist eine auf das im Wesentlichen zylindrische Gefäß 2 von unten aufgesteckte Kapsel 1 dargestellt. Das wenigstens eine Mittel 3 zum Ausbilden eines Freiraums ragt in den Innenbereich der Kapsel hinein. Durch das Hineinragen in den Innenbereich der Kapsel 1 ist eine Verjüngung des Innenquerschnitts der Kapsel 1 erreicht. Es ist demnach eine Schulter ausgebildet, gegen die der Boden des im Wesentlichen zylindrischen Gefäßes 2 bei Aufstecken der Kapsel 1 stößt und die das weitere Einführen des im Wesentlichen zylindrischen Gefäßes 2 in die Kapsel 1 verhindert. Dementsprechend ist ein Freiraum 4 im Bereich zwischen der Mantelfläche der Kapsel (im Bereich zwischen dem wenigstens einem Mittel zum Ausbilden eines Freiraums und dem unteren geschlossenen Ende der Kapsel) und dem Bodenbereich der Kapsel 1 angeordnet. Dieser Freiraum 4 ist an der Oberseite durch den Boden des im Wesentlichen zylindrischen Gefäßes 2 begrenzt.

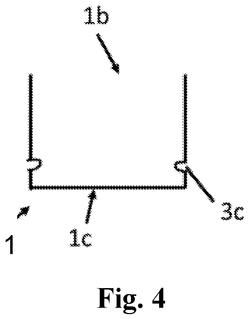

Gemäß der erfindungsgemäßen Ausgestaltung nach Figur 4 sind die Mittel zum Ausbilden eines Freiraums 4 als auf der Mantelfläche zumindest über einen Teil des Umfangs der Mantelfläche verlaufende nach innen gerichtete Sicke 3c ausgebildet. Dies ermöglicht, dass das Gefäß nicht bis zum Boden der Kapsel 1 in diese eindringt und ein Freiraum 4 unterhalb des Gefäßes verbleibt. Der Freiraum 4 dämpft den Aufprall im Falle eines Sturzes.

## Patentansprüche

1. Kapsel (1) zum Aufstecken auf das bodenseitige Ende eines im Wesentlichen zylindrischen Gefäßes (2), mit einer Mantelfläche (1a), einem oberen offenen Ende (1b) und einem unteren geschlossenen Ende (1c), wobei die Mantelfläche (1a) zumindest im Bereich des offenen Endes (1b) im Wesentlichen zylindrisch ausgebildet ist, wobei die Mantelfläche (1a) und das geschlossene Ende (1c) aus einer Kunststofffolie bestehen, wobei die Mantelfläche (1a) oberhalb des geschlossenen Endes (1c) wenigstens ein Mittel (3c) zum Ausbilden eines Freiraums (4) aufweist, wobei das Mittel (3c) zum Ausbilden eines Freiraums (4) in den Innenbereich der Kapsel (1) hineinragt, wodurch eine Verjüngung des Innenquerschnitts der Kapsel (1) erreicht wird, und wobei das Mittel (3c) zum Ausbilden eines Freiraums (4) als eine zumindest über einen Teil des Umfangs der Mantelfläche (1a) verlaufende nach innen gerichtete Sicke (3c) ausgebildet ist, gegen welche Sicke (3c) der Boden des im Wesentlichen zylindrischen Gefäßes (2) beim Aufstecken der Kapsel (1) stoßen kann und die das weitere Einführen des im Wesentlichen zylindrischen Gefäßes (2) in die Kapsel (1) verhindern kann, so dass der Freiraum (4) unterhalb des Gefäßes (2) verbleibt, **dadurch gekennzeichnet, dass** die Mantelfläche (1a) zum Ausgleichen von Toleranzen des Gefäßdurchmessers des im Wesentlichen zylindrischen Gefäßes (2) oberhalb der Mittel (3c) zum Ausbilden eines Freiraums (4) wenigstens eine senkrecht zur Achse der Kapsel (1) zum Innern der Kapsel (1) gerichtete zweite Sicke (5) und/oder nach innen gerichtete Noppen (6) und/oder wenigstens eine parallel zur Achse der Kapsel (1) zum Innern der Kapsel (1) gerichtete dritte Sicke (7) aufweist.

2. Kapsel (1) gemäß Anspruch 1, **dadurch gekennzeichnet, dass** der Freiraum (4) mit einem Gas, insbesondere Luft, oder einem dämpfenden Material gefüllt ist.

3. Kapsel (1) gemäß Anspruch 1 oder Anspruch 2, **dadurch gekennzeichnet, dass** die Mantelfläche (1a) und das geschlossene Ende (1c) aus Polyvinylchlorid (PVC) hergestellt sind.

4. Kapsel (1) gemäß einem der Ansprüche 1 bis 3, **dadurch gekennzeichnet, dass** die Kapsel im Bereich des geschlossenen Endes (1c) eine Perforation (8) zum Entlüften des Innenbereichs der Kapsel (1) aufweist.

5. Kapsel (1) gemäß Anspruch 2, **dadurch gekennzeichnet, dass** das dämpfende Material aus einem Material besteht, das geeignet ist mechanische Bewegungen zu dämpfen, wie Schwämme, Gummi oder andere elastische Materialien.

6. Ein im Wesentlichen zylindrisches Gefäß (2) mit einer Öffnung am oberen Ende (2b) und einem Boden am unteren Ende (2c), mit einer Kapsel (1) gemäß einem der Ansprüche 1 bis 5, wobei die Kapsel (1) auf das untere Ende des Gefäßes (2) aufgesteckt ist.

7. Gefäß (2) gemäß Anspruch 6, **dadurch gekennzeichnet, dass** das Gefäß (2) aus Glas oder einem anderen Material, in dem Chemikalien gelagert werden dürfen, hergestellt ist.

8. Gefäß (2) mit einer Kapsel (1) gemäß Anspruch 7, **dadurch gekennzeichnet, dass** das Gefäß (2) einstückig ausgebildet ist.

## Claims

1. Capsule (1) for fitting onto the bottom-side end of a substantially cylindrical vessel (2), with a shell surface (1a), an upper open end (1b) and a lower closed end (1c), the shell surface (1a), at least in the area of the open end (1b) being of substantially cylindrical, wherein the shell surface (1a) and the lower closed end (1c) consist of a plastic film, wherein the shell surface (1a), above the closed end (1c), comprises at least one means (3c) for forming a free space (4), wherein the means (3c) for forming a free space (4) protrudes into the inner area of the capsule (1), whereby a tapering of the internal cross-section of the capsule (1) is achieved, and wherein the means (3c) for forming a free space (4) is constructed as an inwardly directed bead (3c) extending over at least part of the circumference of the shell surface (1a), against which bead (3c) the base of the substantially cylindrical vessel (2) can abut during insertion of the capsule (1) and which can prevent further insertion of the substantially cylindrical vessel (2) into the capsule (1), so that the free space (4) remains underneath the vessel (2), **characterized in that** the shell surface (1a), for compensating tolerances of the vessel diameter of the essentially cylindrical vessel (2), has above the means (3c) for forming a free space (4) at least one second bead (5) directed perpendicularly to the axis of the capsule (1) towards the inside of the capsule (1) and/or inwardly directed knobs (6) and/or at least a third bead (7) directed parallel to the axis of the capsule (1) towards the inside of the capsule (1).

2. Capsule (1) according to claim 1, **characterized in that** the free space (4) is filled with a gas, in particular air, or a damping material.

3. Capsule (1) according to claim 1 or claim 2, **characterized in that** the shell surface (1a) and the closed end (1c) are made of polyvinyl chloride (PVC).

4. Capsule (1) according to one of claims 1 to 3, **characterized in that** the capsule has, in the area of the closed end (1c), a perforation (8) for venting the inner area of the capsule (1).

5. Capsule (1) according to claim 2, **characterized in that** the damping material consists of a material capable of damping mechanical movements, such as sponges, rubber or other resilient materials.

6. A substantially cylindrical vessel (2) with an opening at the upper end (2b) and a bottom at the lower end (2c), comprising a capsule (1) according to one of claims 1 to 5, the capsule (1) being fitted on the lower end of the substantially cylindrical vessel (2).

7. A substantially cylindrical vessel (2) with an opening at the upper end (2b) and a bottom at the lower end (2c), comprising a capsule (1) for a substantially cylindrical vessel (2) according to claim 6, **characterized in that** the substantially cylindrical vessel (2) is made of glass or another material in which chemicals may be stored.

8. Vessel (2) with a capsule (1) according to claim 7, **characterized in that** the vessel (2) is integrally formed.

## Revendications

1. Capsule (1) destinée à être enfilée sur l'extrémité de fond d'un récipient (2) sensiblement cylindrique comportant une surface d'enveloppe (1a), une extrémité supérieure ouverte (1b) et une extrémité inférieure fermée (1c), la surface d'enveloppe (1a) étant sensiblement cylindrique au moins dans la zone de l'extrémité ouverte (1b), la surface d'enveloppe (1a) et l'extrémité fermée (1c) étant constituées par un film plastique, la surface d'enveloppe (1a) présentant au-dessus de l'extrémité fermée (1c) au moins un moyen (3c) pour former un espace libre (4), le moyen (3c) pour former un espace libre (4) saillant dans la zone intérieure de la capsule (1) de sorte qu'un rétrécissement de la section transversale interne de la capsule (1) est obtenu, et le moyen (3c) pour former un espace libre (4) étant réalisé sous la forme d'un jonc (3c) dirigé vers l'intérieur et s'étendant sur au moins une partie de la circonférence de la surface d'enveloppe (1a), le fond du récipient sensiblement cylindrique (2) pouvant buter contre ce jonc (3c) lors de l'enfilage de la capsule (1) et lequel jonc empêche la poursuite de l'insertion du récipient sensiblement cylindrique (2) dans la capsule (1), de sorte que l'espace libre (4) persiste en dessous du récipient (2), **caractérisé en ce que** pour compenser les tolérances du diamètre du récipient sensiblement cylindrique (2), la surface d'enveloppe (1a) présente au-dessus du moyen (3c) pour former un espace libre (4) au moins un deuxième jonc (5) dirigé perpendiculairement à l'axe de la capsule (1) et vers l'intérieur de la capsule (1) et/ou des protubérances (6) dirigées vers l'intérieur et/ou au moins un troisième jonc (7) orienté parallèlement à l'axe de la capsule (1) et vers l'intérieur de la capsule (1).

2. Capsule (1) selon la revendication 1, **caractérisée en ce que** l'espace libre (4) est rempli d'un gaz, en particulier d'air, ou d'un matériau amortisseur.

3. Capsule (1) selon la revendication 1 ou la revendication 2, **caractérisée en ce que** la surface d'enveloppe (1a) et l'extrémité fermée (1c) sont fabriquées en chlorure de polyvinyle (PVC).

4. Capsule (1) selon l'une des revendications 1 à 3, **caractérisée en ce que** la capsule présente une perforation (8) dans la zone de l'extrémité fermée (1c) pour dégazer la zone intérieure de la capsule (1).

5. Capsule (1) selon la revendication 2, **caractérisée en ce que** le matériau amortisseur est constitué d'un matériau capable d'amortir des mouvements mécaniques, tel que des éponges, du caoutchouc ou d'autres matériaux élastiques.

6. Récipient sensiblement cylindrique (2) ayant une ouverture à l'extrémité supérieure (2b) et un fond à l'extrémité inférieure (2c), muni d'une capsule (1) selon l'une des revendications 1 à 5, la capsule (1) étant enfilée sur l'extrémité inférieure du récipient sensiblement cylindrique (2).

7. Récipient sensiblement cylindrique (2) ayant une ouverture à l'extrémité supérieure (2b) et un fond à l'extrémité inférieure (2c), muni d'une capsule (1) pour un récipient sensiblement cylindrique (2) selon la revendication 6, **caractérisé en ce que** le récipient sensiblement cylindrique (2) est fabriqué en verre ou en un autre matériau dans lequel des produits chimiques peuvent être stockés.

8. Récipient (2) avec une capsule (1) selon la revendication 7, **caractérisé en ce que** le récipient (2) est formé d'un seul tenant.
